Europäisches Patentamt

(19) European Patent Office

Office européen des brevets

(11) Numéro de publication: **0 183 617**

**B1**

(12) **FASCICULE DE BREVET EUROPÉEN**

(51) Int. Cl.⁴: **B 60 R  16/02**

(45) Date de publication du fascicule du brevet: **24.02.88**

(21) Numéro de dépôt: **85402283.7**

(22) Date de dépôt: **22.11.85**

(54) Dispositif de transmission, par couplage optique d'informations issues d'un volant de direction, à un organe solidaire d'un véhicule.

(30) Priorité: **27.11.84 FR 8418064**

(43) Date de publication de la demande:
**04.06.86 Bulletin 86/23**

(45) Mention de la délivrance du brevet:
**24.02.88 Bulletin 88/8**

(84) Etats contractants désignés:
**DE GB IT SE**

(56) Documents cité:
**FR-A-2 352 683**
**GB-A-2 074 313**

(73) Titulaire: **ACIERS ET OUTILLAGE PEUGEOT**
**Société dite:, F-25400 Audincourt (Doubs) (FR)**

(72) Inventeur: **Rudi, Alain, 2 rue Collin, F-90000 Essert**
**(FR)**
Inventeur: **Bertot, Maurice, 69bis rue de Belfort,**
**F-25200 Montbeliard (FR)**

(74) Mandataire: **Moncheny, Michel, c/o Cabinet**
**Lavoix 2 Place d'Estienne d'Orves, F-75441 Paris**
**Cedex 09 (FR)**

## Description

La présente invention se rapporte à des dispositifs de transmission d'informations issues d'un volant de direction, à un organe solidaire d'un véhicule, et notamment de transmission des ordres donnés par le conducteur du véhicule, traduits par des actions sur des organes de commande solidaires du volant, à un système de reconnaissance de l'information solidaire du véhicule.

Il existe dans l'état de la technique des dispositifs de transmission d'informations qui utilisent des contacts tournants à frottement pour réaliser une liaison électrique permettant de transmettre les informations entre les organes de commande portés par le volant de direction et le système de reconnaissance des informations solidaire du véhicule.

Ces dispositifs présentent des inconvénients liés à l'utilisation des contacts tournants à frottement.

En effet, les contacts tournants à frottement peuvent se détériorer à l'usage et compromettre ainsi la qualité de la transmission.

On connait également d'après le document GB-A-2 074 313 un dispositif de transmission d'informations entre un volant et une partie fixe d'une colonne de direction comportant des sources lumineuses reliées à des organes de commande et adaptées pour coopérer avec des moyens de transmission de la lumière vers des capteurs photo-sensibles.

Chacun de ces moyens de transmission est constitué par un anneau comprenant une face plane disposée en regard d'un capteur photo-sensible correspondant, et une face de réflexion de la lumière.

Cependant, ce dispositif présente un certain nombre d'inconvénients notamment au niveau du rendement de la transmission entre le volant et la colonne.

Le but de l'invention est donc de résoudre ces problèmes en proposant un dispositif de transmission qui soit simple, fiable et d'un prix de revient relativement faible tout en permettant d'améliorer le rendement de transmission des informations entre le volant et la colonne.

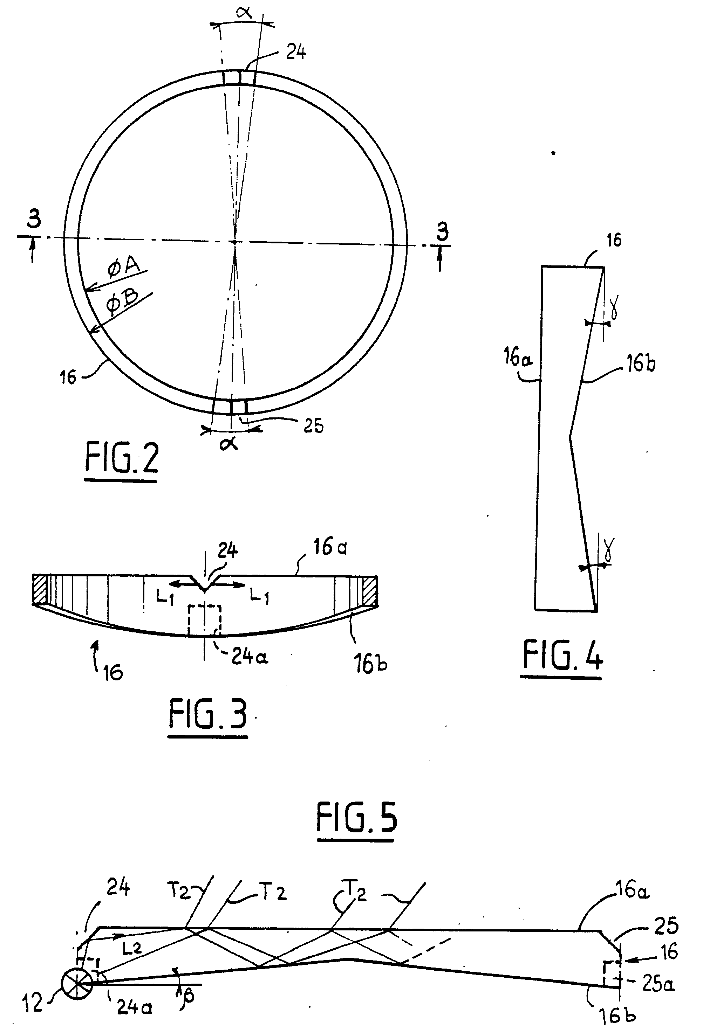

Par rapport au brevet GB-A-2 074 313 qui décrit déjà un dispositif de transmission d'informations issues de plusieurs organes de commande montés sur un volant de direction de véhicule automobile, à un système de reconnaissance des informations solidaire du véhicule, comprenant des sources lumineuses solidaires du volant et reliées respectivement aux organes de commande, les sources lumineuses étant disposées pour coopérer avec des moyens annulaires et coaxiaux avec le volant, de transmission de la lumière vers des capteurs photo-sensibles correspondants solidaires du véhicule, quelle que soit la position relative de chaque capteur photo-sensible par rapport à la source lumineuse à laquelle il est couplé, les capteurs photo-sensibles étant destinés à déclencher des charges correspondant aux organes de commande actionnés, chacun desdits moyens annulaires de transmission de la lumière comportant une face plane, disposée en regard du capteur photo-sensible correspondant et dans laquelle est pratiquée au moins une encoche et une face de réflexion de la lumière se propageant dans lesdits anneaux, dans laquelle est prévu au moins un évidement où vient se loger au moins une source lumineuse, le dispositif selon l'invention est caractérisé en ce que la face de réflexion de la lumière se confond en projection, vue de côté sur la figure 4, avec deux segments de droite formant un V rentrant, largement ouvert.

L'invention sera mieux comprise à l'aide de la description qui va suivre, donnée uniquement à titre d'exemple et faite en se référant aux dessins annexés, sur lesquels;
- la Fig. 1 représente un schéma de principe d'un dispositif de transmission d'informations selon l'invention;
- la Fig. 2 représente une vue de dessus d'un anneau entrant dans la constitution d'un dispositif de transmission d'informations selon l'invention;
- la Fig. 3 est une coupe selon la ligne 3-3 de la Fig. 2;
- la Fig. 4 est une vue de droite en projection de l'anneau de la Fig. 2;
- la Fig. 5 est une vue en développement d'un anneau entrant dans la constitution d'un dispositif selon l'invention; et
- la Fig. 6 représente un mode de réalisation d'un dispositif selon l'invention.

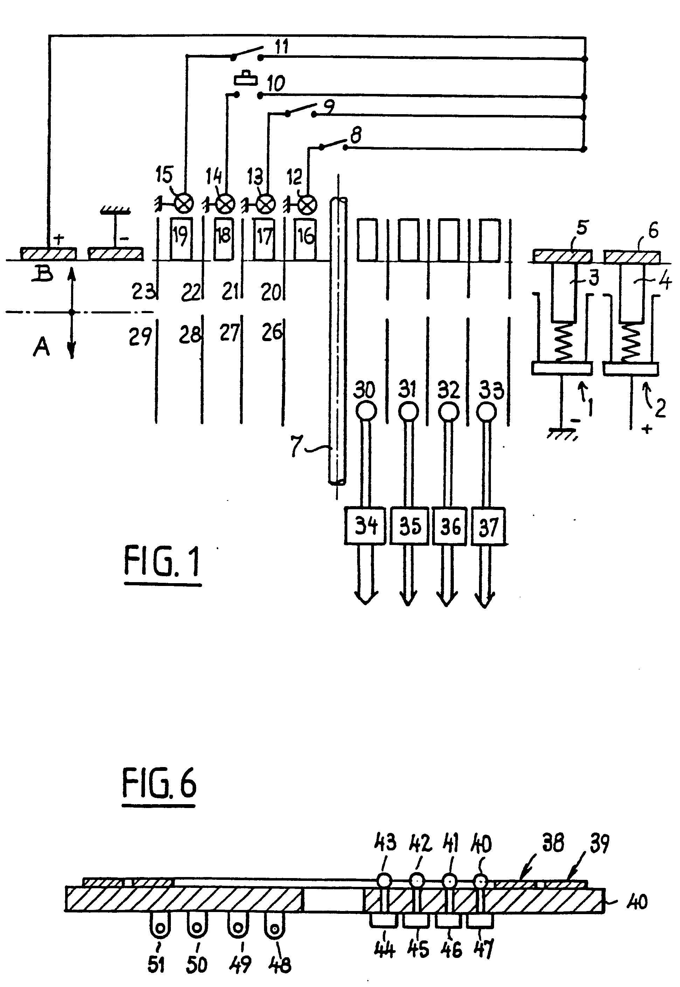

Le dispositif de transmission d'informations selon l'invention, tel que représenté sur la Fig. 1, comprend une partie A solidaire d'un véhicule et une partie B solidaire d'un volant de direction. Ces deux parties sont mobiles en rotation l'une par rapport à l'autre.

L'alimentation de la partie mobile B est assurée par deux contacts tournants à frottement 1 et 2, dont l'un, 2, est relié à la borne positive de la batterie du véhicule et l'autre, 1, à la masse. Ces contacts tournants à frottement 1 et 2 comportent des frotteurs 3 et 4 solidaires du véhicule qui viennent prendre appui sur des pistes circulaires 5 et 6 respectivement, constituées de tout matériau approprié, solidaires du volant mobile.

Ces pistes 5 et 6 sont coaxiales à un arbre de direction 7. La piste 5 est reliée à la masse du volant tandis que la piste 6 est reliée à une borne d'organes de commande 8 à 11, tels que, par exemple, boutons poussoirs, etc.

Selon un autre mode de réalisation de l'invention, l'alimentation de la partie mobile est assurée par exemple par un dispositif à piles ou tout autre source d'alimentation pouvant être intégrée dans le volant.

Les bornes de sortie des organes de commande 8 à 11 sont reliées aux bornes d'entrée de sources lumineuses 12 à 15 respectivement.

Les bornes de sortie de ces sources lumineuses sont reliées à la masse. Ces sources lumineuses, qui, par exemple, peuvent être des lampes telles que celles destinées à l'éclairage du tableau de bord d'un véhicule, sont disposées à proximité d'anneaux 16 à 19 respectivement, comme on le verra par la suite. Les anneaux 16 à 19 sont coaxiaux à l'arbre de direction 7.

Les sources lumineuses 12 à 15 et les anneaux 16 à 19 correspondants sont disposés dans des logements annulaires délimités par des parois ou cloisons opaques 20 à 23 et l'arbre de direction 7. Ces parois 20 à 23 de révolution autour de l'arbre de direction 7 sont solidaires du volant mobile.

Les anneaux 16 à 19 étant de forme identique, on en décrira un seul.

Comme on le voit sur la Fig. 2, l'anneau 16 se présente sous la forme d'une portion de cylindre creux en matériau transparent tel que, par exemple, du métacrylate, de diamètre intérieur Ø A et de diamètre extérieur Ø B. Deux encoches 24 et 25 destinées à renvoyer les rayons issus des sources lumineuses, sont formées symétriquement par rapport au centre dudit anneau et présentent un angle d'ouverture α.

La Fig. 3 montre que l'encoche 24 qui a la forme générale d'un V et peut avoir un angle au sommet égal à 90°, est formée dans une face plane 16a de l'anneau.

Deux évidements 24a et 25a en regard des encoches 24 et 25, sont formés dans la face 16b de l'anneau.

On peut remarquer sur la Fig. 4 que la face 16b de l'anneau se confond en projection, vue de côté, avec deux segments de droite formant un V rentrant largement ouvert, ces segments faisant un angle γ par rapport à une parallèle à la face plane 16a.

Cet angle γ correspond à une configuration de réflexion totale de la face 16b pour certains rayons. En effet, on verra ci-après que cette face 16b fait office de surface de réflexion pour les rayons lumineux provenant des sources lumineuses placées dans les évidements 24a et 25a, se propageant dans l'anneau. L'angle γ est déterminé en fonction de l'indice de réfraction du matériau qui constitue l'anneau.

Les sources lumineuses sont positionnées dans les évidements 24a ou 25a des anneaux correspondants et les faces planes des anneaux sont disposées de manière à faire face à la partie fixe du dispositif de transmission.

Ces faces planes des anneaux 16 à 19 sont donc disposées en regard de logements délimités par des parois annulaires et opaques 26 à 29 et l'arbre de direction 7 (Fig. 1). Ces parois 26 à 29 sont, dans ce mode de réalisation, solidaires du véhicule. Des capteurs photo-sensibles 30 à 33 sont positionnés à l'intérieur des logements délimités par lesdites parois. Les sorties de ces capteurs sont reliées aux entrées de dispositifs 34 à 37 de traitement et d'amplification des signaux de sortie desdits capteurs. Les sorties des dispositifs 34 à 37 sont connectées à des charges (non représentées).

Le fonctionnement du dispositif de transmission selon l'invention est le suivant.

Lorsque l'un des organes de commande, par exemple 8, est actionné, la source lumineuse 12 s'allume. Certains rayons lumineux provenant de cette source lumineuse suivent le trajet L1 (Fig. 3), éclairant ainsi l'intérieur de l'anneau 16. Le trajet L2 (Fig. 5) à l'intérieur de la matière constituant l'anneau est tel que les rayons se refléchissent en partie sur l'encoche 24 ou la face 16a de l'anneau 16. Une partie de ces rayons est renvoyée vers la face 16b qui en développement fait un angle β avec une parallèle à la face 16a. Cet angle β étant déterminé en fonction de l'indice de réfraction du matériau constituant l'anneau, la face 16b agit comme une surface de réflexion et les rayons sont réfléchis par la face 16b vers la face 16a de l'anneau. Lorsque des rayons rencontrent la face 16a, une partie est réfléchie vers la face 16b tandis qu'une autre, T2, est transmise vers l'extérieur de l'anneau 16 par la face 16a. Ce phénomène se reproduit périodiquement sur la face 16a de l'anneau 16, ce qui fait que la face 16a devient lumineuse lorsque la lampe 16 est allumée. Il en est de même pour les autres anneaux lorsque les sources lumineuses correspondantes sont allumées.

La face 16b peut être métallisée pour renvoyer tous les rayons se réfléchissant sur cette face suivant le trajet L2. On peut accentuer la luminosité de la face 16a en effectuant des stries, visant le centre de l'anneau, avec un angle au sommet de 90° ou en utilisant une surface dépolie.

La face 16a de l'anneau 16 éclaire donc les logements de la partie mobile (Fig. 1) délimités par les cloisons 20 à 23 et l'arbre de direction 7 ainsi que les logements de la partie fixe du dispositif, délimités par les cloisons 26 à 29 et l'arbre de direction 7, en regard des logements de la partie mobile.

Le capteur photo-sensible 30, disposé dans le logement délimité par l'arbre de direction 7 et la cloison 26, est donc éclairé et déclenche le dispositif 34 de traitement et d'amplification qui commande la charge correspondant à l'organe de commande actionné.

Les cloisons opaques peuvent être réalisées en matériau économique tel que tôle mince, carton bakélisé, papier imprégné... ou réalisées d'une seule pièce par moulage avec la partie fixe ou la partie mobile du dispositif. Le jeu entre les cloisons portées par la partie mobile et les cloisons solidaires de la partie fixe peut être de l'ordre de 1 à 5 mm, ce qui évite des précisions de montage trop coûteuses.

Selon un autre mode de réalisation du dispositif de transmission suivant l'invention, on élimine les cloisons 20 à 23 en revêtant les faces cylindriques intérieure et extérieure 16 à 19 d'une couche opaque constituée par exemple de peinture noire.

Selon un mode avantageux de réalisation représenté à la Fig. 6, on utilise une plaque 40 de circuit imprimé double face comme support de la partie fixe du dispositif de transmission. En effet, les pistes circulaires 36 et 39 des contacts tournants à frottement, qui dans le premier mode de réalisation étaient solidaires du volant, sont tracées sur la face supérieure de la plaque 40 solidaire du véhicule.

Les capteurs photo-sensibles 40 à 43 sont également disposés sur cette face supérieure de la plaque. Les dispositifs de traitement et d'amplification 44 à 47 sont, quant à eux, disposés sur la face inférieure de ladite plaque 40 ainsi que les dispositifs de raccordement 46 à 51 destinés à raccorder les dispositifs montés sur la plaque de circuit imprimé, par exemple, aux charges.

## Revendications

1. Dispositif de transmission d'informations issues de plusieurs organes de commande (8 à 11) montés sur un volant de direction de véhicule automobile, à un système de reconnaissance des informations solidaire du véhicule, comprenant des sources lumineuses (12 à 15; 53), solidaires du volant et reliées respectivement aux organes de commande (8 à 11), les sources lumineuses étant disposées pour coopérer avec des moyens (16 à 19; 52) annulaires et coaxiaux avec le volant, de transmission de la lumière vers des capteurs photo-sensibles (30 à 33; 40 à 43) correspondants solidaires du véhicule, quelle que soit la position relative de chaque capteur photo-sensible par rapport à la source lumineuse à laquelle il est couplé, les capteurs photo-sensibles (30 à 33; 40 à 43) étant destinés à déclencher des charges correspondant aux organes de commande actionnés, chacun desdits moyens annulaires (16 à 19) de transmission de la lumière comportant une face (16a) plane, disposée en regard du capteur photo-sensible (30) correspondant et dans laquelle est pratiquée au moins une encoche (24, 25), et une face (16b) de réflexion de la lumière se propageant dans lesdits anneaux, dans laquelle est prevu au moins un évidement (24a, 25a) où vient se loger au moins une source lumineuse (12), caractérisé en ce que la face (16b) de réflexion de la lumière se confond en projection, vue de côté (Figure 4), avec deux segments de droite formant un V rentrant largement ouvert.

2. Dispositif selon la revendication 1, caractérisé en ce que les faces cylindriques interieure et extérieure des anneaux (16 à 19) sont revêtues d'une couche de matière opaque.

3. Dispositif selon la revendication 1 ou 2, caractérisé en ce que les capteurs photo-sensibles (40 à 43) sont disposés sur une face d'une plaque de circuit imprimé double face (40) et en ce que des dispositifs (44 à 47) de traitement et d'amplification des signaux de sortie des capteurs photo-sensibles sont disposés sur la face opposée de cette plaque (40).

## Patentansprüche

1. Vorrichtung zur Signalübertragung von einer Anzahl von an einem Lenkrad eines Kraftfahrzeuges montierten Bedienelementen (8 bis 11) zu einem Signalerkennungssystem am Fahrzeug, mit an dem Lenkrad angeordneten und jeweils mit den Bedienelementen (8 bis 11) verbundenen Lichtquellen (12 bis 15 ; 53), wobei die Lichtquellen so montiert sind, daß diese mit ringförmigen und koaxial zum Lenkrad angeordneten Elementen (16 bis 19 ; 52) zur Lichtübertragung zu lichtempfindlichen Fühlern (30 bis 33 ; 40 bis 43) des Fahrzeuges zusammenwirken, welches auch immer die Relativposition jedes lichtempfindlichen Fühlers in bezug auf die damit zusammenwirkende Lichtquelle ist, wobei die lichtempfindlichen Fühler (30 bis 33 ; 40 bis 43) Ladungen entsprechend den betätigten Bedienelementen auslösen, wobei jedes der ringförmigen Elemente (16 bis 19) zur Lichtübertragung eine ebene Fläche (16a) aufweist, welche gegenüber dem entsprechenden lichtempfindlichen Fühler (30) angeordnet ist und welche mindestens eine Aussparung (24, 25) aufweist, sowie eine Fläche (16b) zur Reflexion des sich in den Ringen fortpflanzenden Lichtes, in welcher mindestens eine Aussparung (24a, 25a) vorgesehen ist, in der mindestens eine Lichtquelle (12) unterbringbar ist, dadurch gekennzeichnet, daß die Fläche (16b) zur Reflexion des Lichtes in Projektion nach der Seitenansicht (Fig. 4) zwei Segmentgeraden ergibt, die ein weit geöffnetes V bilden.

2. Vorrichtung nach Anspruch 1, dadurch gekennzeichnet, daß die zylindrischen Innen- und Außenflächen der Ringe (16 bis 19) mit einem Überzug aus lichtundurchlässigem Material beschichtet sind.

3. Vorrichtung nach Anspruch 1 oder 2, dadurch gekennzeichnet, daß die lichtempfindlichen Fühler (40 bis 43) auf einer doppelseitigen Leiterplatte (40) angeordnet sind und daß die Vorrichtungen (44 bis 47) zur Verarbeitung und Verstärkung der Ausgangssignale der lichtempfindlichen Fühler auf der gegenüberliegenden Seite dieser Platte (40) angeordnet sind.

## Claims

1. A device for transmitting data coming from a plurality of control elements (8 to 11) mounted on a steering wheel of a motor vehicle, to a system recognizing the data mounted on the vehicle, said device comprising light sources (12 to 15 ; 53) mounted on the steering wheel and respectively connected to the control elements (8 to 11), the light sources being disposed in such manner as to cooperate with annular means (16 to 19 ; 52) coaxial with the steering wheel, for transmitting the light to corresponding photosensitive detectors (30 to 33 ; 40 to 43)

**0 183 617**

mounted on the vehicle, irrespective of the position of each photosensitive detector relative to the light source with which it is coupled, the photosensitive detectors (30 to 33 ; 40 to 43) being adapted to actuate loads corresponding to the actuated control elements, each of the light transmitting annular means (16 to 19) comprising a planar side (16a) disposed in confronting relation to the corresponding photosensitive detector (30) and in which side is formed at least one notch (24, 25), and a side (16b) for reflecting the light propagated in said annular means, in which reflecting side is provided at least one recess (24a, 25a) in which at least one light source (12) is disposed, characterized in that said side (16b) for reflecting the light corresponds in projection, viewed from the right side (Fig. 4) with two straight-lines defining a wide V-shaped recess.

2. A device according to claim 1, wherein the inner and outer cylindrical sides of the annular means (16 to 19) are covered with a layer of opaque material.

3. A device according to claim 1 or 2, wherein the photosensitive detectors (40 to 43) are disposed on a side of a double-sided printed circuit board (40) and the devices (44 to 47) for processing and amplifying the output signals of the photosensitive detectors are disposed on the opposite side of said board (40).

FIG. 1

FIG. 6

0 183 617

FIG.2

FIG.3

FIG.4

FIG.5

3